# EUROPEAN PATENT APPLICATION

(11) **EP 4 459 148 A1**
(43) Date of publication of application: **06.11.2024**
(21) Application number: 22915843.1
(22) Date of filing: 21.12.2022
(51) Int. Cl.: F16D 7/02, F16D 43/21

(54) **PRODUCTION METHOD FOR FRICTION TORQUE LIMITER**

(30) Priority: 27.12.2021 JP 2021212962
(71) Applicant: Origin Company, Limited, Saitama-shi Saitama 338-0823 (JP)
(72) Inventor: YAWATA, Keisuke, Saitama-shi, Saitama 338-0823 (JP)
(74) Representative: Müller-Boré & Partner Patentanwälte PartG mbB
(86) International application number: PCT/JP2022/047015
(87) International publication number: WO 2023/127619

(57) **Abstract**

Provided is a manufacturing method of a torque limiter, whereby a plurality of spring members (6) and an inner ring (4) can be easily assembled without damaging elastic pieces (14) of the spring members (6). Retaining means is made up of a retaining protrusion (18) that protrudes toward an outer side in a radial direction from an outer peripheral surface of base portions (12) of the spring members (6) and a retained protrusion (26) that protrudes toward an inner side in the radial direction from an inner peripheral surface of an outer ring (8), and also base ends of the elastic pieces (14) connect to inner peripheral surfaces of the base portions (12) of the spring members (6). The base portions (12) are pressed in an axial direction to be press-fit into the inner ring (4) before assembling the spring members (6) and the outer ring (8). Alternatively, in a press-fitting step in which the plurality of spring members (6) are sequentially press-fit into the inner ring (4) one at a time before assembling with the outer ring (8), an amount of press-fitting of each of the plurality of spring members (6) as to the inner ring (4) is gradually reduced.

## Description

### Technical Field

The present invention relates to a manufacturing method of a torque limiter that includes an inner ring having a circular cross section, an annular spring member that surrounds an outer peripheral surface of the inner ring, and an outer ring that is non-rotational with respect to the spring member, in which the inner ring and the outer ring rotate relative to each other when rotational torque of a predetermined value or greater is applied between the inner ring and the outer ring.

### Background Art

Torque limiters are parts that are in common use as parts that, when an excessive load is applied to a motor of a drive source or the like, cuts off the load and protects the motor, i.e., as parts that restrict transmitted torque. Further, torque limiters are also applied to portions at which a display of a laptop computer, for example, is pivotably attached to a main unit thereof, thereby fixing the display to an optional angle and at the same time enabling the display and the main unit to rotate relative to each other when excessive torque is manually applied, and thus can carry out functions of a so-called torque hinge.

PTL 1 below describes an example of a friction torque limiter using an annular spring member, which has already been filed by the applicant of the present application prior to the filing of the present application, and has been granted. This torque limiter includes an inner ring having a circular cross section, an annular spring member, and an outer ring, which have a common center axis, in which the spring member surrounds an outer peripheral surface of the inner ring, and the spring member and the outer ring are assembled so as to be relatively non-rotatable with respect to each other by retaining means. A plurality of the spring members are disposed in a straight row in an axial direction. The plurality of the spring members each includes a base portion that is an annular thin plate, and a plurality of elastic pieces that extend toward an inner side in a radial direction, inclining in the axial direction and that also are disposed at intervals in a peripheral direction. Tip end portions of the elastic pieces have abutting inner surfaces that abut the outer peripheral surface of the inner ring. The retaining means is made up of a retaining protrusion that protrudes from an inner peripheral surface of the base portion of the spring members to the inner side in the radial direction, and a post-like retained protrusion that is integral with the outer ring and also that linearly extends in the axial direction from an inner peripheral surface of the outer ring at a position separated from the inner side in the radial direction, with the elastic pieces being provided on an inner peripheral edge portion of the retaining protrusion. When rotational torque of a predetermined value or greater is applied between the inner ring and the outer ring, the inner ring and the outer ring rotate relative to each other against frictional force between the outer peripheral surface of the inner ring and the abutting inner surface of the spring members.

### Citation List

### Patent Literature

PTL 1: Japanese Patent No. 6655654

### Summary of Invention

### Technical Problem

With regard to a manufacturing method of the torque limiter described in the above PTL 1, there is the following problem in a case of assembling the inner ring and the spring members and thereafter assembling these with the outer ring, although not mentioned in the above PTL 1. That is to say, at the time of press-fitting the spring members into the inner ring, there is a need to locally press-fit the proximity of the elastic pieces, i.e., the retaining protrusion, from the perspective of preventing damaging the elastic pieces of the spring members, which necessitates positioning of a press-fitting portion as to the retaining protrusion, making the manufacturing process troublesome. In a case of press-fitting the entire base portion that is a circular ring thin plate, instead of the retaining protrusion, the retaining protrusion that is present between the base portion and the elastic pieces may be bent in the axial direction with the base portion as a base end, which is undesirable. Conversely, there is the following problem in a case of assembling the outer ring and the plurality of spring members and thereafter combining these with the inner ring. That is to say, the spring member needs to be press-fit to the inner ring with a considerably great force, due to the inner ring being press-fit to the plurality of spring members at the same time, and the elastic pieces of the spring members may be damaged in this case as well. Also, a large-sized and high-output device becomes necessary for press-fitting of the inner ring, raising manufacturing costs.

The present invention has been made in view of the above-described fact, and a main technical object thereof is to provide a novel and improved manufacturing method of a torque limiter in which the plurality of spring members and the inner ring can be easily assembled without damaging the elastic pieces of the spring members.

### Solution to Problem

As a result of intensive studies, the present inventors have found that the above main technical problems can be solved by (1) making up retaining means from a retaining protrusion that protrudes toward an outer side in a radial direction from an outer peripheral surface of base portions of spring members and a retained protrusion that protrudes toward an inner side in the radial direction from an inner peripheral surface of an outer ring, with base ends of elastic pieces connected to inner peripheral surfaces of the base portions of the spring members, and the base portions pressed in an axial direction to be press-fit into an inner ring before assembling the spring members and the outer ring, or (2) in a press-fitting step in which a plurality of the spring members are sequentially press-fit into the inner ring one at a time before assembling with the outer ring, an amount of press-fitting of each of the plurality of spring members as to the inner ring is gradually reduced.

That is to say, according to a first aspect of the present invention, a manufacturing method of a torque limiter is provided as a manufacturing method of a torque limiter that solves the above main technical problems, in which the torque limiter includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
the spring member includes a base portion that is an annular thin plate, and a plurality of elastic pieces that extend toward an inner side in a radial direction, inclined in an axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members.

The retaining means is made up of a retaining protrusion that protrudes toward an outer side in the radial direction from an outer peripheral surface of the base portion of the spring member and a retained protrusion that protrudes toward the inner side in the radial direction from an inner peripheral surface of the outer ring, and
a base end of the elastic piece is connected to an inner peripheral surface of the base portion.

The manufacturing method includes
a press-fitting step of press-fitting the spring member to the inner ring by pressing the base portion of the spring member in the axial direction with respect to the inner ring, and
an assembling step of, following the press-fitting step, assembling the inner ring to which the spring member is press-fit, with the outer ring.

In this case, preferably, in the press-fitting step, a plurality of the spring members are sequentially press-fit to the inner ring, and an amount of press-fitting of each of the plurality of spring members as to the inner ring is gradually reduced. Also, preferably, in the press-fitting step, the base portion of the spring member is pressed overall by an annular pressing tool. Furthermore, preferably, in the press-fitting step, the base portion is pressed with respect to the inner ring, in a state in which guides are disposed on both sides in the peripheral direction of the retaining protrusion.

According to a second aspect of the present invention, a manufacturing method of a torque limiter is provided as a manufacturing method of a torque limiter that solves the above main technical problems, in which the torque limiter includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
a plurality of the spring members are disposed in series in an axial direction, each of the plurality of spring members including a base portion that is an annular thin plate, and a plurality of elastic pieces that extend toward an inner side in a radial direction, inclined in the axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members.

The manufacturing method includes
a press-fitting step of sequentially press-fitting the spring members to the inner ring one at a time; and
an assembling step of, following the press-fitting step, assembling the inner ring to which the spring member is press-fit, with the outer ring.

In the press-fitting step, an amount of press-fitting of each of the plurality of spring members as to the inner ring is gradually reduced.

Preferably, a support wall that is cylindrical is provided on an outer peripheral edge of the base portion, erected in the axial direction and thereafter extending outward in the radial direction. The spring members are preferably formed by pressing a thin plate made of metal.

### Advantageous Effects of Invention

According to the first aspect of the present invention, the base ends of the elastic pieces of the spring members are connected to the inner peripheral surface of the base portion that is the annular thin plate, and the base portion is pressed in the axial direction and press-fit into the inner ring before the spring members are assembled with the outer ring. That is to say, the elastic pieces are directly connected to the base portion and also the base portion is annular, and accordingly a pressing position for pressing the spring member in the axial direction is not limited to a predetermined position of the spring member and may be any position on the entire base portion. Thus, the spring member can be easily press-fit to the inner ring without damaging the elastic pieces. Also, according to the second aspect of the present invention, even in a case of press-fitting a plurality of the spring members into the inner ring, in the press-fitting step of sequentially press-fitting each of the plurality of spring members into the inner ring one at a time before the plurality of spring members are assembled with the outer ring, the amount of press-fitting of the plurality of spring members as to the inner ring is gradually reduced. Thus, the spring members can be pressed with a small and constant force, and accordingly the plurality of spring members can be press-fit to the inner ring without applying excessive force to the elastic pieces, and hence, the plurality of spring members and the inner ring can be easily assembled without damaging the elastic pieces.

### Brief Description of Drawings

[Fig. 1] Fig. 1 is a diagram illustrating an entire configuration of a preferred embodiment of a torque limiter configured in accordance with the present invention.
[Fig. 2] Fig. 2 is a disassembled perspective view of the torque limiter illustrated in Fig. 1.
[Fig. 3] Fig. 3 is a diagram separately illustrating an inner ring illustrated in Fig. 1.
[Fig. 4] Fig. 4 is a diagram separately illustrating a spring member illustrated in Fig. 1.
[Fig. 5] Fig. 5 is a diagram separately illustrating an outer ring illustrated in Fig. 1.
[Fig. 6] Fig. 6 is a diagram separately illustrating a shielding plate illustrated in Fig. 1.
[Fig. 7] Fig. 7 is a diagram schematically illustrating processes of press-fitting the spring member illustrated in Fig. 4 to the inner ring illustrated in Fig. 3.

### Description of Embodiments

A preferred embodiment of a torque limiter configured following the present invention will be described below in further detail with reference to the attached drawings.

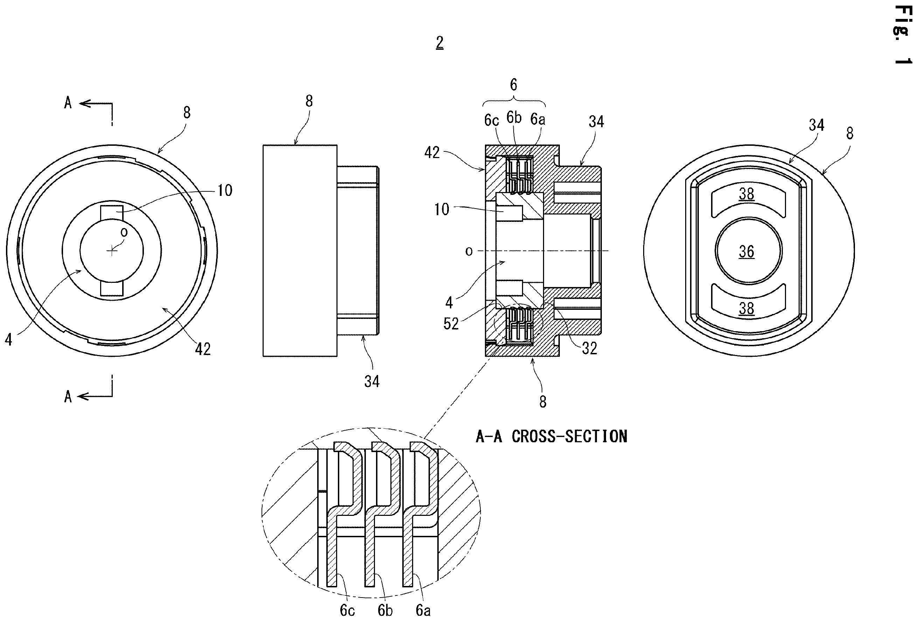

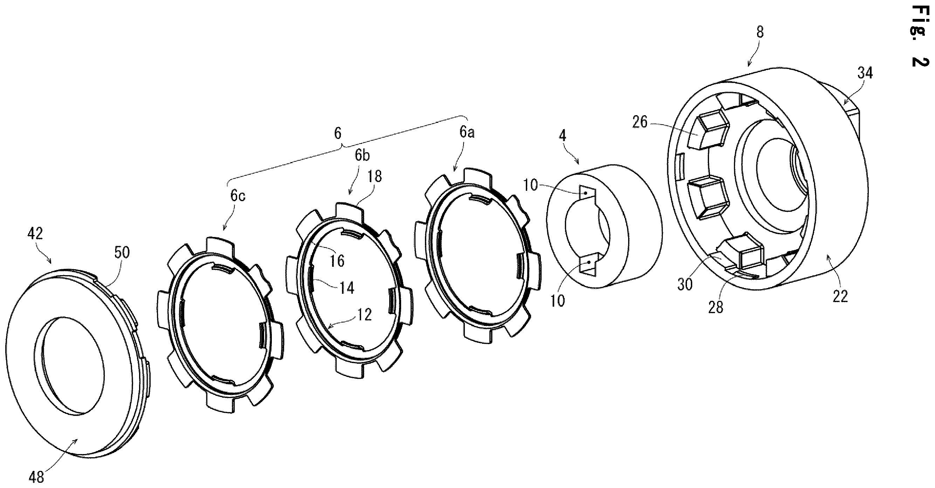

To describe with reference to Fig. 1 and Fig. 2, the torque limiter of which the entirety is denoted by numeral 2 includes an inner ring 4, a spring member 6 that is annular, and an outer ring 8, which have a common central axis o. In the embodiment that is illustrated, the inner ring 4 and the spring member 6 are made of metal, but the outer ring 8 is made of resin.

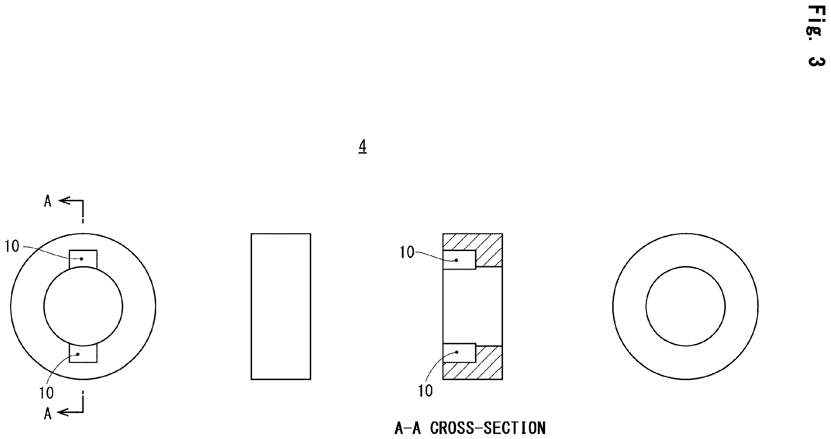

To describe with reference to Fig. 3, along with Fig. 1 and Fig. 2, the inner ring 4 has a cylindrical form and accordingly has a circular cross section, passing through in an axial direction. An inner radius of an inner peripheral surface of the inner ring 4 is locally enlarged, with fitting grooves 10 extending in the axial direction provided on either side of a diameter direction. One side of the fitting grooves 10 in the axial direction is opened and the other is closed, and an outer member of the one side that is omitted from illustration is linked to the inner ring 4 via the fitting grooves 10.

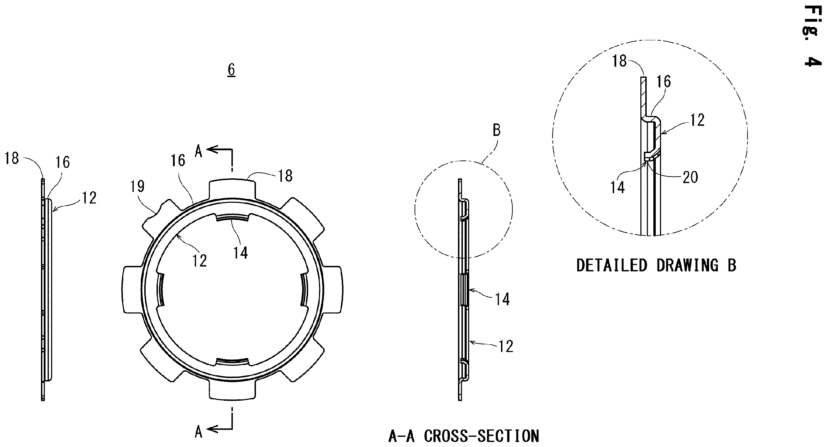

To describe with reference to Fig. 4, along with Fig. 1 and Fig. 2, the spring member 6 is disposed surrounding an outer peripheral surface of the inner ring 4, perpendicularly to the axial direction. A plurality of the spring members 6, three in the embodiment that is illustrated, are disposed in series in the axial direction, and are denoted by a to c in order from the right to the left in the illustrations in Fig. 1 and Fig. 2. The spring member 6 includes a base portion 12 that is an annular thin plate, and elastic pieces 14 that extend toward an inner side in a radial direction and that incline in the axial direction, and are formed by pressing a thin plate made of metal. In the embodiment that is illustrated, the base portion 12 is a circular ring thin plate, with a cylindrical support wall 16 that is erected in the axial direction and thereafter slightly extends outward in the radial direction disposed on an outer peripheral edge thereof. The cross-sectional form of the support wall 16 is a letter-L from. Eight retaining protrusions 18 that have substantially rectangular forms protruding outward in the radial direction are formed at equiangular intervals in the peripheral direction on an outer peripheral edge of the support wall 16. A notch 19 that is recessed toward the inner side in the radial direction is formed on an outer peripheral surface of one of the eight retaining protrusions 18. Base ends of the elastic pieces 14 are connected to an inner peripheral surface of the base portion 12, and a plurality of the elastic pieces 14 (four at equiangular intervals in the peripheral direction in the embodiment that is illustrated) are provided at intervals in the peripheral direction. Tip end portions of the elastic pieces 14 have abutting inner surfaces 20 that abut the outer peripheral surface of the inner ring 4.

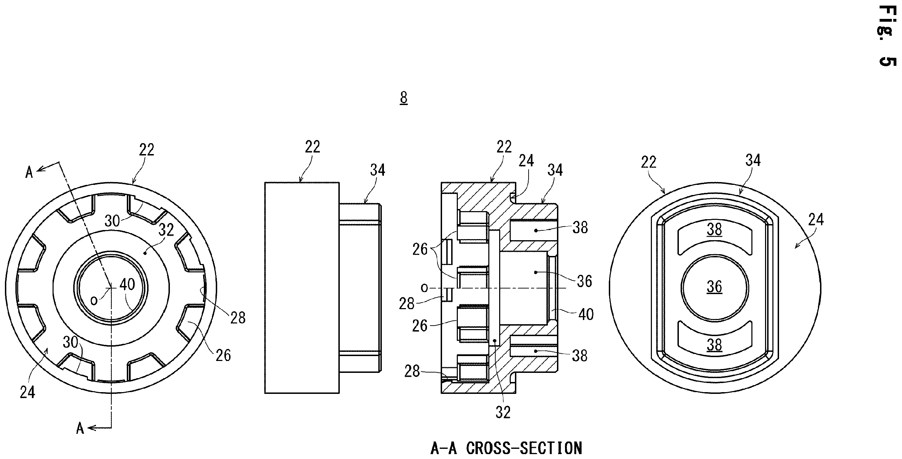

To describe with reference to Fig. 5, along with Fig. 1 and Fig. 2, the outer ring 8 includes an outer ring main portion 22 that has a cylindrical form, and an end plate 24 with a circular ring form extending inward in the radial direction from an axial-direction one-side end portion of an inner peripheral surface of the outer ring main portion 22, and the inner ring 4 and the spring member 6 are accommodated in an inner side of the outer ring main portion 22. Retained protrusions 26 making up retaining means cooperatively with the retaining protrusions 18 formed on the spring member 6 are formed on the inner peripheral surface of the outer ring main portion 22. The retained protrusions 26 have substantially trapezoidal cross sections protruding toward the inner side in the radial direction from the inner peripheral surface of the outer ring main portion 22 with eight thereof formed corresponding to the retaining protrusions 18, i.e., at equiangular intervals in the peripheral direction. In the embodiment that is illustrated, the retained protrusions 26 are integrally connected to an axial-direction other-side end surface of the end plate 24, and the retained protrusions 26 extend linearly in the axial direction from the axial-direction other-side end surface of the end plate 24 to an axial-direction other-side end portion of the outer ring main portion 22. Four retaining protrusions 28 that protrude inward in the radial direction are formed on the axial-direction other-side end portion of the inner peripheral surface of the outer ring main portion 22, at equiangular intervals in the peripheral direction. Further, three arcuate protrusions 30 that protrude inward in the radial direction are formed on the axial-direction other-side end portion of the inner peripheral surface of the outer ring main portion 22. The arcuate protrusions 30 are formed at different positions from the retaining protrusions 28 in the peripheral direction. An inner peripheral edge portion of an axial-direction other-side surface of the end plate 24 is displaced somewhat to an axial-direction one-end side, and accordingly a recessed portion 32 that has a circular cross section is formed on the axial-direction other-side surface of the end plate 24. A linking portion 34 that protrudes toward the axial-direction one-end side is formed on the axial-direction one-side surface of the end plate 24. As viewed from the axial direction, the linking portion 34 has a form in which both sides in the diameter direction of a circle are notched out, in parallel and linearly, with a circular through hole 36 that passes through in the axial direction formed at a middle portion thereof, and two holes 38 that have bottoms and that are substantially arcuate, formed extending in the axial direction at intermediate positions in the radial direction. The two holes 38 are each situated on both sides in the diameter direction across the through hole 36. An annular ridge 40 that protrudes toward the inner side in the radial direction is also formed on an axial-direction one-side end portion of an inner peripheral surface of the linking portion 34. The other outer member, which is omitted from illustration, is fit to an outer peripheral surface of the linking portion 34 or the two holes 38, or all thereof, whereby the outer ring 8 is linked to another linking member.

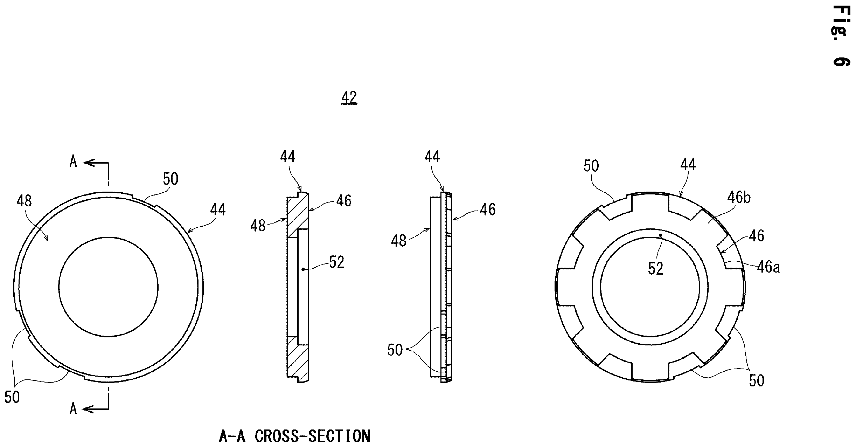

As illustrated in Fig. 1, the axial-direction other-side end of the outer ring main portion 22 is closed off by a shielding plate 42 that is made of resin. To describe with reference to Fig. 2, and Fig. 6, along with Fig. 1, the shielding plate 42 includes an intermediate portion 44 that is a circular ring thin plate disposed perpendicular to the axial direction, a one-side elevated portion 46 that is elevated from an axial-direction one-side surface of the intermediate portion 44 on one side in the axial direction, and an other-side elevated portion 48 that is elevated from an axial-direction other-side surface of the intermediate portion 44 on the other side in the axial direction. Three notches 50 are formed on an outer peripheral surface of the intermediate portion 44 at intervals in the peripheral direction. Peripheral-direction positions of the notches 50 correspond to the peripheral-direction positions of the arcuate protrusions 30 of the outer ring 8. The one-side elevated portion 46 is made up of a circular ring portion 46a that continues in the peripheral direction of the axial-direction one-side surface of the intermediate portion 44 following an inner peripheral surface thereof, and protruding portions 46b that protrude outward in the radial direction from an outer peripheral surface of the circular ring portion 46a. Eight protruding portions 46b are formed corresponding to the number of the retained protrusions 26 of the outer ring 8, i.e., at equiangular intervals in the peripheral direction. As viewed from the axial direction, the protruding portions 46b are substantially rectangular, with outer peripheral edges thereof extending along an outer peripheral edge of the intermediate portion 44, the diameter of an imaginary circle passing through the outer peripheral edges of all protruding portions 46b being equal to the outer diameter of the intermediate portion 44, and the outer peripheral edge portions are tapered. Space portions between two protruding portions 46b that are adjacent in the peripheral direction are substantially trapezoidal forms that are capable of receiving axial-direction end portions of the retained protrusions 26 of the outer ring 8. The other-side elevated portion 48 is a circular ring and has the same center axis as the intermediate portion 44, but the outer diameter and the inner diameter thereof are both smaller than those of the intermediate portion 44. Due to the inner diameter of the other-side elevated portion 48 being smaller than the inner diameter of the intermediate portion 44, a recessed portion 52 with a circular cross section is formed on the axial-direction one-side surface of the shielding plate 42.

Next, steps of manufacturing the torque limiter 2 by assembling the components described above will be described. In these steps, it is important that the spring member 6 is press-fit to the inner ring 4 before being assembled to the outer ring 8. Accordingly, the above steps include a press-fitting step of press-fitting the spring member 6 to the inner ring 4, and following the press-fitting step, an assembling step of assembling the inner ring 4, to which the spring member 6 has been press-fit, to the outer ring 8.

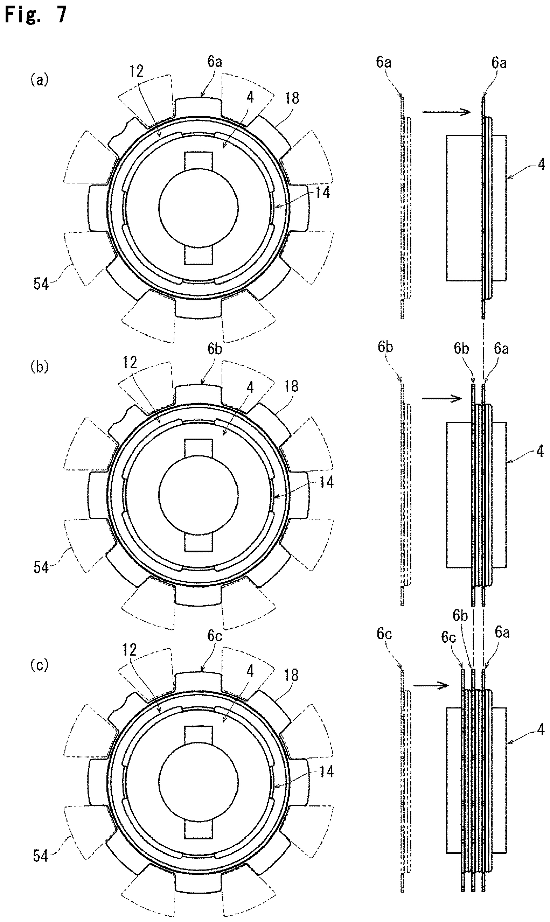

To describe with reference to Fig. 7, according to the present invention, the base ends of the elastic pieces 14 in the spring member 6 are connected to the inner peripheral surface of the base portion 12 that is an annular thin plate, and the base portion 12 is pressed in the axial direction and press-fit to the inner ring 4 before the spring member 6 is assembled with the outer ring 8. The direction in which the spring member 6 is press-fit to the inner ring 4 is indicated by the arrows in the drawings. The elastic pieces 14 are directly connected to the base portion 12 and also the base portion 12 is annular, and accordingly a pressing position for pressing the spring member 6 in the axial direction is not limited to a predetermined position of the spring member 6 and may be any position on the entire base portion 12. Accordingly, the spring member 6 can be easily press-fit to the inner ring 4 without damaging the elastic pieces 14. That is to say, the above press-fitting step can be smoothly carried out. In the embodiment that is illustrated, in a state in which guides 54 (phantom lines) are disposed on both sides of the retaining protrusions 18 in the peripheral direction as illustrated in the drawings to the left side in Fig. 7, the base portion 12 is pressed against the inner ring by a pressing tool that has a circular ring form, omitted from illustration. The guides 54 are rod-like and linearly stand in the axial direction, and by placement thereof on both sides of the retaining protrusion 18 in the peripheral direction, the orientation of the spring member 6 with respect to the inner ring 4 is maintained, and accordingly the pressing tool can perform press-fitting of the spring member 6 to the inner ring 4 with good precision. In the embodiment that is illustrated, the guides 54 are disposed in all spaces between two retaining protrusions 18 that are adjacent in the peripheral direction, but the number and placement of the guides 54 can be adjusted as appropriate as long as the orientation of the spring member 6 with respect to the inner ring 4 can be maintained. In the above press-fitting step, further, the plurality of (three in the embodiment that is illustrated) spring members 6 are sequentially press-fit to the inner ring 4. In doing so, the amount of press-fitting of each of the plurality of spring members 6 as to the inner ring 4 is gradually reduced, such that one spring member 6 is allowed to come into contact with another spring member 6 in the axial direction, but not to press it in the axial direction. In Fig. 7, axial-direction positions of each of the plurality of spring members 6 that are press-fit are indicated by dot-dashed lines. After the plurality of spring members 6 are press-fit to the inner ring 4, the plurality of spring members 6 may be separated from each other, and in the embodiment that is illustrated, the three spring members 6 are disposed slightly distanced from each other as illustrated in the partial enlarged view along cross-section A-A in Fig. 1. Thus, the spring members 6 can be pressed with a small and constant force, and accordingly the plurality of spring members 6 can be press-fit to the inner ring 4 without applying excessive force to the elastic pieces 14, and hence, the plurality of spring members 6 and the inner ring 4 can be easily assembled without damaging the elastic pieces 14. Note that in the press-fitting step, the peripheral-direction positions of the retaining protrusions 18 of the plurality of spring members 6 are all made to match due to the presence of the guides 54.

Due to the peripheral-direction positions of the retaining protrusions 18 of the plurality of spring members 6 being all made to match in the press-fitting step, in the assembling step the inner ring 4 to which the spring members 6 have been press-fit is inserted into the inner side of the outer ring main portion 22 such that the retaining protrusions 18 of the spring members 6 and the retained protrusions 26 formed on the inner peripheral surface of the outer ring main portion 22 are retained in the peripheral direction, and the axial-direction one-side end portion of the inner ring 4 is pivotally supported by the outer ring 8 at the recessed portion 32 so as to be rotatable. Thereafter, the shielding plate 42 is made to match at the axial-direction other-side end of the outer ring main portion 22, such that the retained protrusions 26 of the outer ring 8 are positioned between two protruding portions 46b that are adjacent in the peripheral direction, and is forced in the axial direction toward the outer ring main portion 22. Thus, the intermediate portion 44 elastically rides over the retaining protrusions 28 formed on the inner peripheral surface of the outer ring main portion 22, and also the axial-direction end portions of the retained protrusions 26 of the outer ring 8 are inserted between the two protruding portions 46b that are adjacent in the peripheral direction. Thus, the shielding plate 42 and the outer ring 8 are integrally assembled, and the axial-direction other-side end portion of the inner ring 4 is pivotally supported by the shielding plate 42 at the recessed portion 52 so as to be rotatable. In this way, the torque limiter 2 is manufactured.

Operations of the torque limiter 2 manufactured as described above are the same as operations of a general torque limiter, with two outer members that are omitted from illustration each being linked to the inner ring 4 and the outer ring 8. When rotational torque applied between the inner ring 4 and the outer ring 8 is smaller than a predetermined value, the inner ring 4 and the outer ring 8 integrally rotate and transmit torque by the frictional force between the outer peripheral surface of the inner ring 4 and the abutting inner surfaces 20 of the spring member 6. However, when the rotational torque applied between the inner ring 4 and the outer ring 8 is no smaller than the predetermined value, the inner ring 4 and the outer ring 8 rotate relative to each other against the frictional force between the outer peripheral surface of the inner ring 4 and the abutting inner surfaces 20 of the spring members 6, and the transmission of torque is cut off.

Although the manufacturing method of the torque limiter configured in accordance with the present invention has been described above with reference to the attached drawings, the present invention is not limited to the above-described embodiment, and modifications and changes can be made as appropriate without departing from the present invention. Even in a case in which the retaining means is made up of a retaining protrusion protruding inward in the radial direction from the inner peripheral surface of the base portion of the spring member, and a retained ridge that is integral with the outer ring and that also linearly extends in the axial direction from the inner peripheral surface of the outer ring at a position separated from the inner side in the radial direction and the elastic pieces are provided on the inner peripheral edge of the retaining protrusion, in the same way as with the torque limiter disclosed in the above PTL 1, sequentially press-fitting the plurality of spring members to the inner ring one at a time enables the spring members to be pressed by a small and constant force in the same way. Accordingly, the plurality of spring members can be press-fit to the inner ring without applying excessive force to the elastic pieces, and hence, the plurality of spring members and the inner ring can be easily assembled without damaging the elastic pieces. Although both members of the outer ring 8 and the shielding plate 42 are made of synthetic resin in the embodiment that is illustrated, for assembly by elastic engagement, both members may be made of metal if they are to be assembled by welding or the like and not by elastic engagement. Also, depending on the magnitude of frictional force or the like, the inner ring 4 and the spring members 6 may be made of synthetic resin and not made of metal.

### Description of Reference Numerals

- 2: Torque limiter
- 4: Inner ring
- 6: Spring member
- 8: Outer ring
- 12: Base portion
- 14: Elastic piece
- 20: Abutting inner surface
- 18: Retaining protrusion (retaining means)
- 26: Retained protrusion (retaining means)

## Claims

1. A manufacturing method of a torque limiter that includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
the spring member includes a base portion that is an annular thin plate, and a plurality of elastic pieces that extend toward an inner side in a radial direction, inclined in an axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members, wherein
the retaining means is made up of a retaining protrusion that protrudes toward an outer side in the radial direction from an outer peripheral surface of the base portion of the spring member and a retained protrusion that protrudes toward the inner side in the radial direction from an inner peripheral surface of the outer ring, and
a base end of the elastic piece is connected to an inner peripheral surface of the base portion,
the manufacturing method comprising:
a press-fitting step of press-fitting the spring member to the inner ring by pressing the base portion of the spring member in the axial direction with respect to the inner ring; and
an assembling step of, following the press-fitting step, assembling the inner ring to which the spring member is press-fit, with the outer ring.

2. The manufacturing method of the torque limiter of claim 1, wherein, in the press-fitting step, a plurality of the spring members are sequentially press-fit to the inner ring, and an amount of press-fitting of each of the plurality of spring members as to the inner ring is gradually reduced.

3. The manufacturing method of the torque limiter of claim 1, wherein, in the press-fitting step, the base portion of the spring member is pressed overall by an annular pressing tool.

4. The manufacturing method of the torque limiter of claim 1, wherein, in the press-fitting step, the base portion is pressed with respect to the inner ring, in a state in which guides are disposed on both sides in the peripheral direction of the retaining protrusion.

5. A manufacturing method of a torque limiter that includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
a plurality of the spring members are disposed in series in an axial direction, each of the plurality of spring members including a base portion that is an annular thin plate, and a plurality of elastic pieces that extend toward an inner side in a radial direction, inclined in the axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members,
the manufacturing method comprising:
a press-fitting step of sequentially press-fitting the spring members to the inner ring one at a time; and
an assembling step of, following the press-fitting step, assembling the inner ring to which the spring member is press-fit, with the outer ring, wherein
in the press-fitting step, an amount of press-fitting of each of the plurality of spring members as to the inner ring is gradually reduced.

6. The manufacturing method of the torque limiter of claim 1 or 5, wherein a support wall that is cylindrical is provided on an outer peripheral edge of the base portion, erected in the axial direction and thereafter extending outward in the radial direction.

7. The manufacturing method of the torque limiter of claim 1 or 5, wherein the spring members are formed by pressing a thin plate made of metal.

8. A torque limiter that includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
the spring member includes a base portion that is an annular thin plate, and a plurality of elastic pieces that extend toward an inner side in a radial direction, inclined in an axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members, wherein
the retaining means is made up of a retaining protrusion that protrudes toward an outer side in the radial direction from an outer peripheral surface of the base portion of the spring member and a retained protrusion that protrudes toward the inner side in the radial direction from an inner peripheral surface of the outer ring, and
a base end of the elastic piece is connected to an inner peripheral surface of the base portion.

9. The torque limiter of claim 8, wherein a support wall that is cylindrical is provided on an outer peripheral edge of the base portion, erected in the axial direction and thereafter extending outward in the radial direction.

10. A torque limiter that includes an inner ring having a circular cross section, a spring member that is annular, and an outer ring, which have a common center axis, in which the spring member surrounds an outer peripheral surface of the inner ring, and the spring member and the outer ring are assembled so as to be relatively non-rotational by retaining means,
a plurality of the spring members are disposed in series in an axial direction, each of the plurality of spring members including a base portion that is an annular thin plate, and a plurality of elastic pieces that extend toward an inner side in a radial direction, inclined in the axial direction, and that also are disposed at intervals in a peripheral direction, with tip end portions of the elastic pieces having abutting inner surfaces that abut the outer peripheral surface of the inner ring, and
when rotational torque of a predetermined value or greater is applied between the inner ring and the outer ring, the inner ring and the outer ring rotate relative to each other against frictional force between the outer peripheral surface of the inner ring and the abutting inner surface of the spring members, wherein
the plurality of spring members are each disposed separated from each other.
